# FASCICULE DE BREVET EUROPEEN

(11) **EP 1 497 906 B1**
(45) Date de publication et mention de la délivrance du brevet: **15.12.2010**
(21) Numéro de dépôt: 03714565.3
(22) Date de dépôt: 07.04.2003
(51) Int. Cl.: H02K 21/12, H02K 1/27

(54) **MACHINE ELECTRIQUE A FLUX TRANSVERSE A ROTOR DENTELE**
ELEKTRISCHE MASCHINE MIT TRANSVERSALEM MAGNETISCHEM FLUSS UND VERZAHNUNGSROTOR
TRANSVERSE FLOW ELECTRIC MACHINE WITH A TOOTHED ROTOR

(30) Priorité: 11.04.2002 US 371422 P
(43) Date de publication de la demande: 19.01.2005
(73) Titulaire: Eocycle Technologies Inc., Lévis, Québec G6V 6K9 (CA)
(72) Inventeur: DUBOIS, Maxime, Lévis, Québec G6V 8T7 (CA); POLINDER, Henk, NL-2645 NK Delfgauw (NL); FERREIRA, Jan, Abraham, NL-2289 KE Rijswijk (NL)
(74) Mandataire: Bertrand, Didier
(86) Numéro de dépôt international: PCT/CA2003/000518
(87) Numéro de publication internationale: WO 2003/088454

(56) Documents cités:
- EP-A- 0 998 010
- EP-A- 1 005 136
- FR-A- 2 730 873

## Description

### DOMAINE TECHNIQUE DE L'INVENTION

L'invention se rapporte à une machine électrique à flux transverse, pouvant être utilisée en alternateur ou en moteur, et destinée à la conversion d'un mouvement tournant en une puissance électrique, et inversement.

### ÉTAT DE LA TECHNIQUE

Les machines électriques à flux transverse comportent un stator circulaire et un rotor circulaire, séparés par un espace d'air appelé entrefer, lequel permet la libre rotation du rotor par rapport au stator, et dont le stator comprend des noyaux en fer doux, qui conduisent le flux magnétique dans une direction principalement perpendiculaire à la direction de rotation du rotor. Le stator des machines électriques à flux transverse comprend également des conducteurs électriques, formant un tore, lequel est bobiné parallèlement à la direction de rotation de la machine. Dans ce type de machine, le rotor comprend une pluralité de pièces identiques d'aimants permanents, disposées de manière à établir un flux magnétique alterné en direction de l'entrefer. Ce flux magnétique traverse l'entrefer avec une orientation radiale, et pénètre les noyaux en fer doux du stator, lesquels dirigent ce flux magnétique autour des conducteurs électriques.

Dans les machines électriques à flux transverse du type comprenant un rotor, composé d'une pluralité de pièces d'aimants permanents identiques, et de concentrateurs de flux magnétique, les aimants permanents sont orientés de manière à ce que leur direction de magnétisation soit parallèle à la direction de rotation du rotor. Des concentrateurs de flux magnétique sont intercalés entre les aimants permanents et redirigent le flux magnétique que produisent les aimants permanents, radialement vers l'entrefer.

La machine électrique à flux transverse comporte un stator, lequel comprend des noyaux de fer doux en forme de fer à cheval, orientés de manière à ce que le flux magnétique circulant à l'intérieur de ces noyaux, soit dirigé dans une direction principalement perpendiculaire à la direction de rotation du rotor.

L'orientation perpendiculaire du flux magnétique dans les noyaux du stator, par rapport à la direction de rotation, donne aux machines électriques à flux transverse un ratio élevé de couple mécanique par unité de masse de la machine électrique.

Le brevet US 5,051,641 décrit une machine électrique à flux transverse à concentration de flux, dont chacun des concentrateurs de flux magnétique du rotor doit être fixé à un disque ou un à anneau rotorique commun par l'intermédiaire de boulons et d'écrous. Ce type de machine comporte également des pièces d'aimants permanents de même dimension radiale que les concentrateurs de flux magnétique, et où chacune des pièces d'aimants permanents doit être fixée aux concentrateurs de flux magnétique par l'utilisation d'une colle appliquée entre ces deux pièces. La machine présente également un stator, lequel est constitué d'une pluralité de noyaux de fer doux en forme de fer à cheval localisés radialement des deux côtés du rotor. Le nombre de noyaux de fer doux en forme de fer à cheval sur le premier côté du rotor est égal au nombre de noyaux de fer doux en forme de fer à cheval sur le second côté du rotor.

Le brevet US 5,877,578 présente une machine à flux transverse à concentration de flux dans laquelle le stator est situé des deux côtés du rotor, mais où les aimants peuvent être insérés dans des guides. Les guides doivent cependant être fixés à un disque ou un anneau en utilisant des boulons, ce qui ajoute aux activités de production.

Le brevet US 5,854,521 présente une machine à flux transverse sans concentration de flux où le stator n'est situé que d'un seul côté du rotor, mais où les aimants sont magnétisés perpendiculairement à la direction de rotation du rotor, ce qui augmente les flux de fuite magnétique entre deux aimants adjacents, et diminue conséquemment la puissance convertie par unité de masse de la machine.

Les principaux problèmes de la machine à flux transverse à concentration de flux de l'art antérieur sont les suivants. La production du rotor est difficile, les concentrateurs de flux magnétiques devant être fixés à un disque ou un anneau rotorique commun à l'aide de boulons et d'écrous. L'ensemble de la machine n'est pas très rigide étant donné que le stator est localisé des deux côtés du rotor. Finalement, la valeur du couple mécanique maximal sur l'arbre de la machine par unité de masse de la machine est limitée par la saturation magnétique des noyaux en forme de fer à cheval, car la distance d'entrefer est la même dans la position alignée et non-alignée du rotor.

Les documents EP 0998010 et EP1005136 font connaître une machine présentant les caractéristiques du préambule de la revendication annexée 1.

### SOMMAIRE DE L'INVENTION

Les principaux objectifs de la machine à flux transverse conçue conformément à l'invention sont les suivants.

Premièrement, la production du rotor est facilitée, grâce à la présence d'encoches et de dents formant une structure magnétique dentée, présentant des guides mécaniques naturels pour l'insertion des blocs magnétiques du rotor.

Deuxièmement, la rigidité mécanique de l'ensemble de la machine électrique est augmentée, car le stator est localisé d'un seul côté par rapport au rotor, et car des guides supportant les blocs magnétiques du rotor dans leur ensemble sont utilisés au rotor.

Troisièmement, la machine électrique à flux transverse, telle que conçue selon l'invention possède une valeur élevée du couple mécanique maximal sur l'arbre de la machine par unité de masse de machine électrique. L'augmentation de cette valeur est permise par un courant électrique élevé dans les conducteurs électriques du stator, cette amélioration étant issue d'une distance d'entrefer plus grande dans la position non-alignée du rotor que dans la position alignée dudit rotor. Cette différence de la distance d'entrefer permet une diminution de l'inductance du stator pour la position non-alignée, laquelle diminution d'inductance augmente le courant électrique admissible avant d'atteindre la saturation magnétique des noyaux en fer doux du stator.

L'invention a pour but de fournir une machine électrique à flux transverse ayant au moins une des deux caractéristiques décrites ci-après.

L'invention atteint son but grâce aux caractéristiques figurant dans la partie caractérisante de la revendication 1 annexée.

La première caractéristique est la facilité d'installation des pièces d'aimants permanents et de concentrateurs de flux magnétique à là structure rotorique, par l'insertion de ceux-ci à l'intérieur de la structure rotorique, qui contient des guides dentelés. De tels guides permettent une insertion facile du sous-ensemble composé d'aimants permanents et de concentrateurs de flux magnétique, et la rétention dudit sous-ensemble est favorisée, sans que des boulons et écrous soient nécessaires. Cette caractéristique permet de réduire le temps de production de la machine à flux transverse ayant des aimants permanents et concentrateurs de flux magnétiques.

La deuxième caractéristique est l'accroissement de la distance d'entrefer entre les noyaux de fer doux en forme de fer à cheval du stator et le rotor, pour la position non-alignée du rotor, tout en conservant une distance d'entrefer la plus faible possible entre lesdits noyaux de fer doux en forme de fer à cheval du stator et les concentrateurs de flux magnétique du rotor, dans la position alignée du rotor.

La position non-alignée du rotor est définie comme étant la position du rotor par rapport au stator pour laquelle les pôles magnétiques du rotor ne font pas face aux noyaux de fer doux du stator. La position dite alignée est définie comme étant la position du rotor par rapport au stator, pour laquelle les pôles magnétiques du rotor font face aux noyaux de fer doux en forme de fer à cheval.

Une plus grande distance d'entrefer à la position non-alignée, qu'à la position aligné du rotor permet d'augmenter la grandeur du courant maximal qui peut circuler dans les conducteurs, avant d'atteindre la saturation magnétique des noyaux de fer doux du stator. Il en résulte une plus grande puissance convertie par la machine, par unité de masse.

Préférablement la présente invention utilise un stator entièrement localisé d'un seul côté de l'anneau rotorique. Une telle construction présente une plus grande rigidité mécanique du rotor et du stator, et permet de réduire plus facilement la distance d'entrefer entre le rotor et le stator.

Conformément à l'invention, ces caractéristiques sont obtenues, dans une machine à flux transverse, grâce à deux structures magnétiques dentelées, lesquelles sont constituées d'empilements identiques de tôles en fer doux au rotor, lesquelles tôles possèdent des encoches et des dents. Un sous-ensemble magnétique du rotor comprend un concentrateur de flux magnétique en fer doux, un bloc non-magnétique et deux pièces d'aimants permanents, lesdits aimants permanents sont disposés de chaque côté du concentrateur de flux magnétique. Des sous-ensembles magnétiques du rotor sont glissés dans lesdites encoches du rotor, qui servent de guide d'insertion et de fixation. Chaque sous-ensemble magnétique du rotor est inséré dans son encoche, de telle façon que la distance entre la surface du concentrateur de flux magnétique qui fait face à l'entrefer et le fond de l'encoche soit supérieur à la distance entre le bout de la dent et le fond de l'encoche.

Le stator est formé de deux types de noyau de fer doux, localisées radialement sur un seul côté par rapport au rotor. Le premier type de pièces magnétiques du stator est appelé "noyau de fer doux en forme de fer à cheval", et est formé par l'empilement de tôles en acier doux, possédant une forme de fer à cheval. Le second type de pièces magnétiques du stator est appelé "noyau en fer doux de retour de flux", et est formé par l'empilement de tôles d'acier, et possède une forme préférablement trapézoïdale. Le nombre de noyaux de fer doux du premier type est égal au nombre de noyaux de fer doux du second type, les deux types de noyau étant disposés périphériquement de façon alternée, et positionnés au stator, de telle façon que chacun des noyaux du stator fasse généralement face à un concentrateur de flux magnétique du rotor, dans la direction radiale.

Afin de réduire les fuites du champ magnétique au stator entre les deux types de noyau, le chevauchement entre ceux-ci est minimisé dans une machine électrique conçue selon l'invention. Ainsi, les deux types de noyau statorique sont conçus de manière à ce que la plus longue dimension du noyau en fer doux de retour de flux soit inférieure à la distance extérieure du noyau de fer doux en forme de fer à cheval, laquelle distance extérieure est mesurée au bout des pattes du fer à cheval.

Le stator possède également un bobinage de conducteurs électriques, formant un tore, lequel tore est positionné périphériquement dans la partie intérieure de tous les noyaux de fer doux en forme de fer à cheval. Dans la direction radiale de la machine électrique, ledit tore est en contact avec l'arête intérieur des noyaux de fer doux en forme de fer à cheval, et est également en contact avec le noyau en fer doux de retour de flux.

Selon un aspect large de la présente invention, l'invention concerne une machine électrique à courant alternatif possédant un premier élément ayant une alternance de noyaux d'excitation et de noyaux de retour de flux, sans contact et un bobinage de conducteurs électriques, le bobinage de conducteurs électriques étant enroulé autour de tous lesdits noyaux d'excitation; un deuxième élément ayant une section excitatrice comprenant deux structures magnétiques dentelées isolées l'une de l'autre par un isolant non-magnétique, chacune des structures magnétiques dentelées comprenant un nombre d'encoches égal au nombre total de noyaux d'excitation et de noyaux de retour de flux, les encoches correspondantes de chacune des structures magnétiques dentelées étant alignées; à l'intérieur de chacune des encoches est inséré un bloc aimanté de telle sorte qu'un agencement alterné de pôles nord et de pôles sud magnétiques est créé dans chacune des structures magnétiques dentelées de ladite section excitatrice; un entrefer entre le premier élément et le deuxième élément; au moins un du premier élément et du deuxième élément pouvant tourner autour d'un axe de rotation commun au premier élément et au deuxième élément.

Selon un autre aspect large de la présente invention, l'invention concerne une machine électrique à flux transverse à courant alternatif monophasé; comprenant des pièces magnétiques insérées à l'intérieur de la structure rotorique, qui contient des guides dentelés, les guides permettant une insertion facile et une rétention desdites pièces magnétiques.

Selon un autre aspect large de la présente invention, l'invention concerne un appareil électrique comprenant une pluralité de machines électriques à flux transverse, les machines étant juxtaposées les unes aux autres dans l'orientation axiale et partageant un axe de rotation commun.

### BRÈVE DESCRIPTION DES DESSINS

Les caractéristiques, aspects et avantages de la présente invention mentionnés ci-haut ainsi que certains autres seront mieux compris à l'aide de la description qui suit et des dessins qui l'accompagnent, dans lesquels:
La figure 1 illustre une coupe en élévation d'une machine à flux transverse à rotor
extérieur selon une réalisation préférée de l'invention;
La figure 2 illustre une coupe en élévation d'une machine à flux transverse à rotor intérieur selon une réalisation préférée de l'invention;
La figure 3 est une vue de face en perspective, montrant six pôles d'une machine à flux transverse réalisée conformément à une réalisation préférée de l'invention;
La figure 4 est une vue de dessus en perspective de trois pôles d'une machine à flux transverse conformément à une réalisation préférée de l'invention, montrant les pièces du rotor en lignes pleines, et les noyaux en fer doux du stator en lignes pointillées pour fins de simplicité;
La figure 5 illustre une vue de dessus en section de trois pôles du rotor de la machine à flux transverse selon une réalisation préférée de l'invention, à partir d'un plan tangent à l'entrefer, les pièces du stator n'étant pas illustrées; et
La figure 6 illustre une coupe selon le plan A-A de la figure 5, d'une section de quatre pôles du rotor et du stator de la machine à flux transverse selon une réalisation préférée de l'invention, les pièces du stator étant illustrées.

### DESCRIPTION DÉTAILLÉE D'UNE RÉALISATION PRÉFÉRÉE DE L'INVENTION

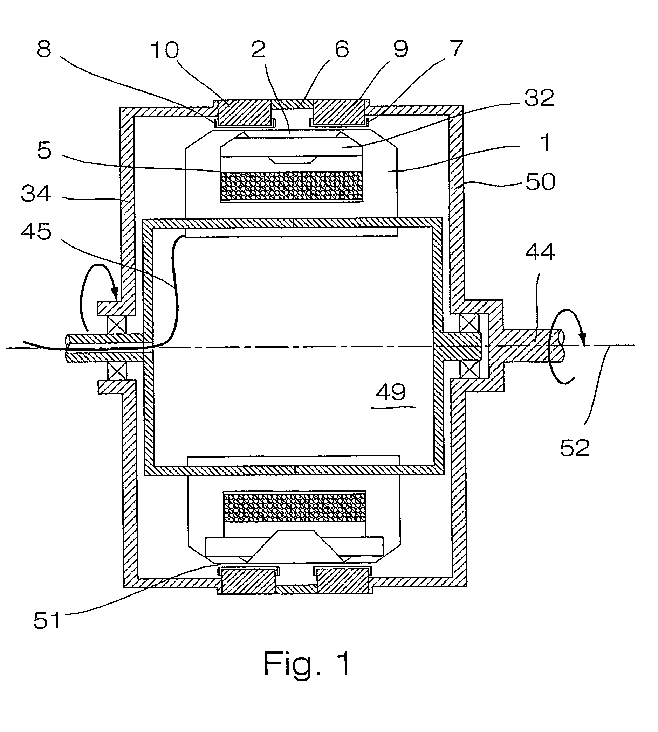

À la figure 1, la machine à flux transverse d'une réalisation préférée de l'invention est illustrée dans une configuration où le stator 49 est situé à une plus courte distance de l'axe de rotation 52 de la machine dans la direction radiale, que le rotor 50. Le rotor 50 est extérieur et tourne autour du stator 49, qui est intérieur. Les connexions électriques 45 du stator sont enfilés à travers l'arbre de rotation 44 du stator, lequel est fixe. Un entrefer 51 est présent entre les concentrateurs de flux magnétique 7 et 8 et les noyaux en fer doux 1 et 2. Le cylindre de support 34 sert à tenir le rotor.

Les structures magnétiques dentelées 9 et 10 forment des cylindres, qui peuvent être maintenus ensemble par l'intermédiaire de l'isolant non-magnétique 6 (en passant des tiges non-magnétiques reliant ensemble les éléments 6, 9 et 10). Cet ensemble 6, 9 et 10 doit être relié à l'arbre de rotation, et ceci peut être réalisé en boulonnant les structures magnétiques dentelées 9 et 10 au cylindre de support 34, qui possède un connexion mécanique avec l'arbre de rotation.

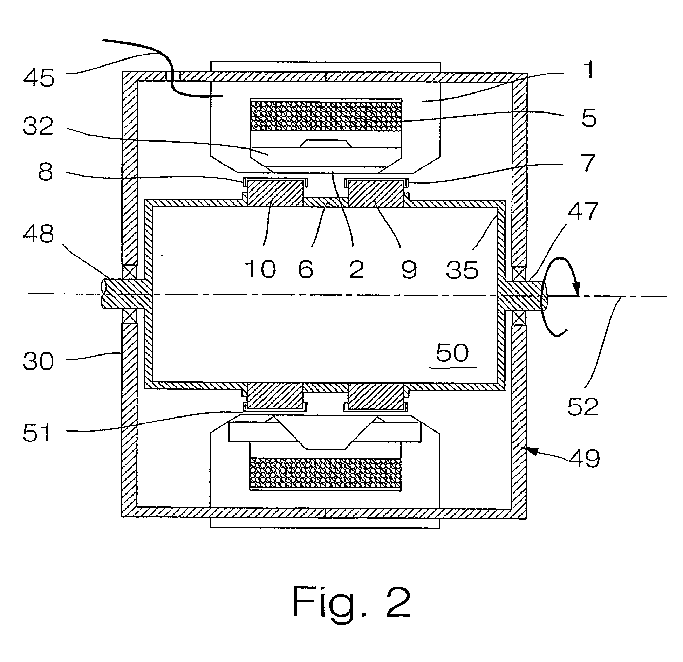

A la figure 2, la machine à flux transverse d'une réalisation préférée de l'invention est illustrée dans une configuration où le stator est situé à une plus grande distance de l'axe de rotation 52 de la machine dans sa direction radiale, que le rotor 50. Le rotor 50 compte deux arbres de rotation 47, 48 centrés sur l'axe de rotation 52, et accessibles des deux côtés de la machine. L'arbre de rotation 48 est relié à la structure magnétique dentelée 10 d'un côté de la machine, par la plaque circulaire 35. L'arbre de rotation 47 est relié à la structure magnétique dentelée 9 de l'autre côté de la machine, par la plaque circulaire 35. Les deux structures magnétiques dentelées 9, 10 sont reliées l'une à l'autre par l'isolant non-magnétique 6. Les éléments statoriques sont maintenus par le cylindre de support statorique 30, lequel est maintenu fixe. Les connexions électriques 45 sont accessibles à l'extérieur de la machine par le biais d'une ouverture pratiquée localement à travers le cylindre de support statorique 30.

Préférablement, le cylindre de support statorique 30 est entaillé avec le même nombre d'entailles que le nombre de noyaux en forme de fer à cheval. Les noyaux en forme de fer à cheval sont insérés dans ces entailles, et maintenus en place par des vis entre ces fers à cheval et la pièce de maintien 31.

L'un ou l'autre des deux morceaux 49 et 50 illustrés aux figures 1 et 2 pourrait être le rotor ou le stator. Préférablement, le stator 49 est fixe et contient le bobinage, et le rotor 50 contient les aimants. Si le bobinage est sur la partie qui doit tourner, il faut alors faire des connexions vers le monde extérieur par le biais de bagues de glissement (des fils électriques qui tournent vont s'enrouler autour de l'axe). Les bagues de glissement sont possible à de faibles courants, mais à de hauts courants, ils engendreront des arcs sur les bagues, et réduiront la vie utile de la machine.

Dans la réalisation préférée de l'invention, le stator est soit à l'intérieur du rotor (configuration de la figure 1) ou soit à l'extérieur du rotor (configuration de la figure 2). Il n'y a pas de situation où les éléments fixes (le stator) sont à la fois à l'intérieur et à l'extérieur du rotor. Le stator est donc localisé d'un seul côté par rapport au rotor.

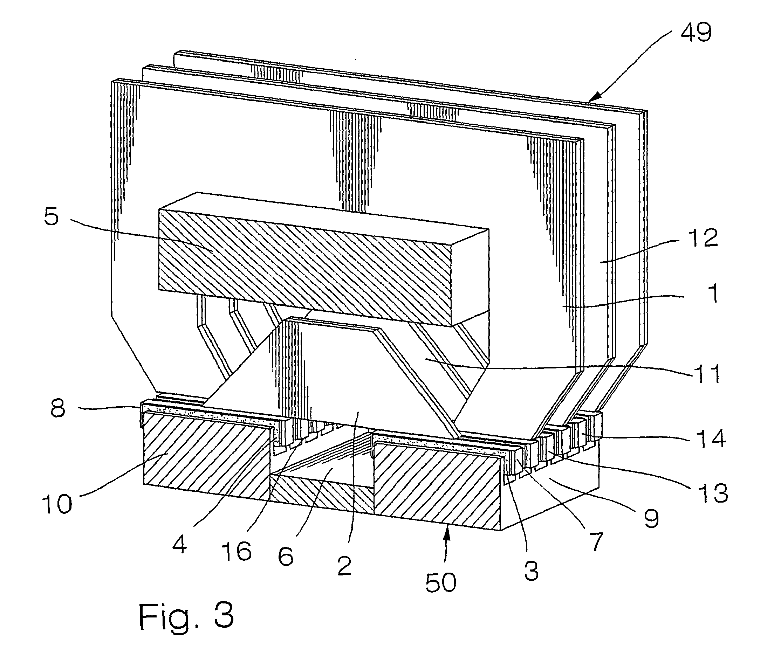

La figure 3 représente une section de trois (3) paires de pôles, où chaque paire de pôle est constituée d'un noyau de fer doux en forme de fer à cheval 1 au stator, d'un noyau en fer doux de retour de flux 2 au stator, de concentrateurs de flux magnétique 7, 8 au rotor, et d'aimants permanents au rotor (non identifiés à la Figure 3). Le rotor et le stator de la machine à flux transverse selon une réalisation préférée de l'invention, sont composés d'une pluralité de paires de pôles magnétiques identiques disposées de façon adjacente dans la direction du mouvement du rotor.

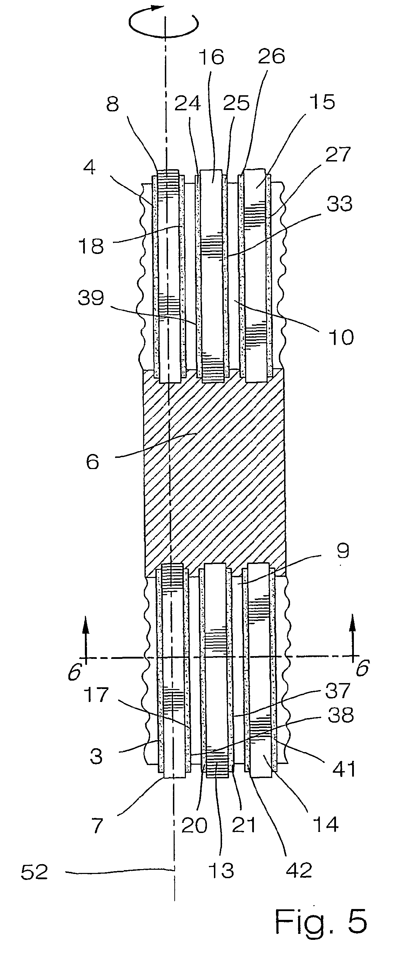

Au rotor, chaque pôle comprend deux concentrateurs de flux magnétique 7, 8 et quatre aimants 3, 17, 4, 18 (voir Figure 5). Deux structures magnétiques dentelées 9, 10 sont identiques et séparées par un isolant non-magnétique 6. Chacune des structures dentelées 9, 10 possède un nombre de dents et d'encoches égal au nombre de pôles magnétiques. Chacune des encoches de la structure magnétique dentelée 9 reçoit un concentrateur de flux magnétique et deux aimants, lesquels sont disposés de chaque côté du concentrateur de flux magnétique.

Au stator, chaque paire de pôle comprend un noyau de fer doux en forme de fer à cheval 1, et un noyau en fer doux de retour de flux 2, lesquels sont disposés côte à côte de telle sorte que les deux extrémités du noyau 1 en forme de fer à cheval fassent généralement face aux bouts extérieurs des deux concentrateurs de flux magnétique 13, 16 compris par un premier pôle du rotor, et que les extrémités du noyau en fer doux de retour de flux 2 fassent généralement face aux bouts intérieurs des concentrateurs de flux magnétiques 7, 8 compris par un second pôle du rotor.

Les noyaux de fer doux de retour de flux sont préférablement de forme trapézoïdale. Toutefois, il est entendu que ceux-ci pourraient être d'une autre forme sans se départir de l'essence de l'invention. Par exemple, une forme en demi-lune pourrait être possible, ou une forme rectangulaire. Dans le cas de la forme rectangulaire, les performances seront inférieures, à cause des fuites magnétiques entre le noyau en fer à cheval et le noyau de retour de flux. Une forme en escalier pourrait également être possible, ou la pente de l'escalier épouserait les contours d'un trapèze équivalent.

Alterner entre des noyaux de fer doux en forme de fer à cheval et des noyaux de fer doux de retour de flux au stator permet la relaxation de chaque aimant du rotor entre chaque excitation. Les noyaux de retour de flux permettent de compléter le circuit magnétique. Ils permettent également de réduire les fuites magnétiques entre des concentrateurs de flux adjacents. Il serait possible de les enlever, et de compléter le circuit magnétique en remplaçant le matériau non-magnétique utilisé pour la pièce 6, par un matériau magnétique. Cependant, cela augmentera les fuites entre concentrateurs adjacents, et diminuera conséquemment le flux magnétique à vide (sans courant) circulant dans le noyau en fer à cheval. Également, cela augmentera l'inductance du stator, et réduira le courant admissible dans le stator avant d'atteindre la saturation magnétique des noyaux en fer à cheval. Ces deux facteurs auront comme conséquencé une plus faible puissance convertie par la machine. Si on omet ces noyaux de retour de flux, la machine sera moins performante, mais cette machine aura potentiellement des performances supérieures à d'autres machines conventionnelles. De plus, la fabrication de la machine sera plus aisée du fait de l'absence de ces noyaux de retour de flux.

Au stator, un bobinage de conducteurs électriques 5 commun à tous les pôles, est disposé à l'intérieur des noyaux de fer doux en forme de fer à cheval 1, 12, lesquels bornent ledit bobinage de conducteurs électriques 5 sur trois de ses quatre faces. Les noyaux en fer doux de retour de flux 2, 11 sont situées entre la quatrième face dudit bobinage de conducteurs électriques 5 et le rotor 50. Il n'y a qu'un seul bobinage 5, et il englobe tous les noyaux en forme de fer à cheval. Cela donne un bobinage très simple. Le bobinage forme un beigne autour duquel on retrouve une multitude de fers à cheval.

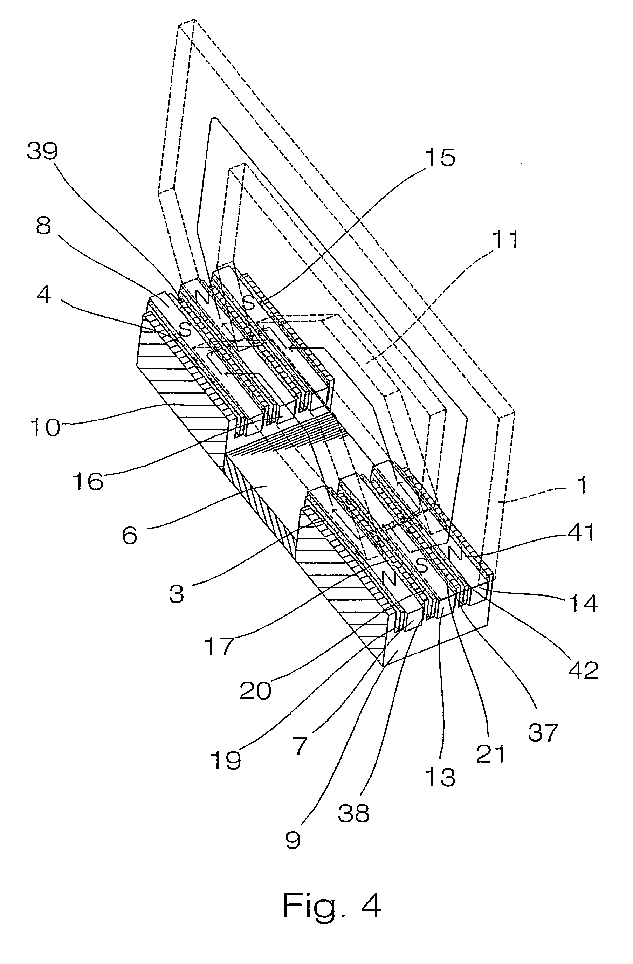

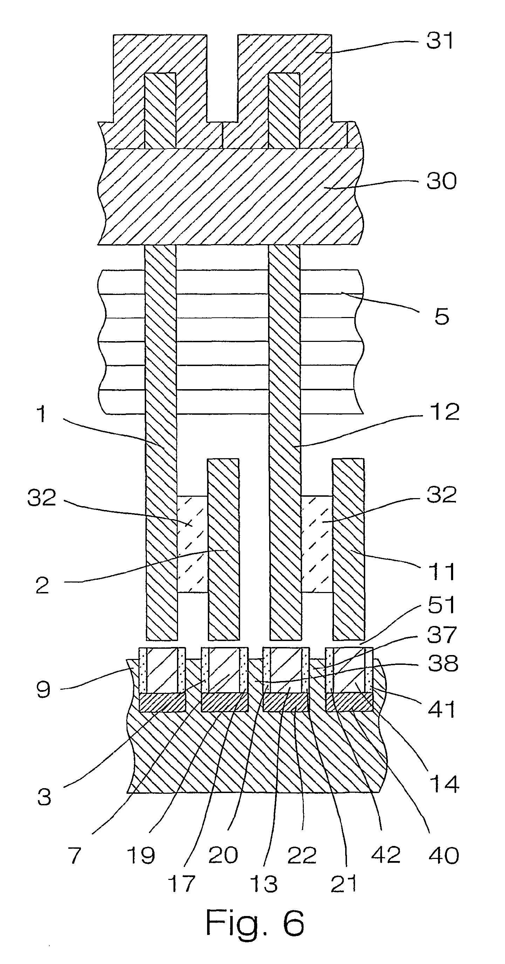

À la figure 4, une seconde vue en perspective montre la circulation du flux magnétique entre les pôles du rotor illustrés en lignes pleines et les pôles du stator illustrés en lignes pointillées. Les deux structures magnétiques dentelées 9, 10 du rotor sont séparés par un isolant non-magnétique 6. Chaque encoche desdites structures magnétiques dentelées 9, 10 contient un concentrateur de flux magnétique 7, lequel est bordé de deux côtés par deux aimants permanents 3, 17 possédant des directions de magnétisations qui s'opposent mutuellement. Les deux aimants permanents 3, 17 et le concentrateur de flux 7 sont isolés du bas de l'encoche de la structure magnétique dentelée 9, par un bloc non-magnétique 19 (voir Figure 6). L'ensemble constitué de deux aimants permanents 3, 17, du concentrateur de flux magnétique 7, et du bloc non-magnétique 19 est identifié comme formant un "sous-ensemble magnétique du rotor".

Le bloc non-magnétique du sous-ensemble magnétique permet d'isoler le concentrateur de flux magnétique du fond de l'encoche. Si le concentrateur touchait au fond de l'encoche, il y aurait alors une grande quantité de flux magnétique qui sortirait de l'aimant, entrerait dans le concentrateur, passerait dans l'encoche, jusque dans la structure dentelée. Ce flux retournerait dans l'aimant, ce qui constituerait alors une fuite magnétique importante, et réduirait la quantité de flux traversant dans l'entrefer. Il est donc avantageux de garder un espace entre le concentrateur et le fond de l'encoche.

Mécaniquement, la façon dont est maintenu cet espace peut varier. La réalisation préférée de l'invention comprend un bloc non-magnétique. Mécaniquement, cette réalisation permet de bien maintenir le sous-ensemble magnétique dans le fond de l'encoche. Cependant, il est possible d'utiliser une méthode de retenue qui soit différente, et de remplacer ce bloc non-magnétique par un espace d'air. Le bloc non-magnétique peut donc être omis sans se départir de l'invention.

Au lieu du sous-ensemble magnétique du rotor, formé par le concentrateur de flux magnétique, les deux aimants permanents et le bloc non-magnétique, il serait possible de n'utiliser qu'un seul aimant. Cependant, cet aimant devra être magnétisé dans une direction perpendiculaire à la direction de rotation du rotor, afin de générer un flux magnétique dirigé vers le stator. La quantité d'aimants sera plus grande. Le principal problème de cette configuration est l'augmentation des fuites magnétiques entre aimants adjacents qui diminue les performances de la machine.

La structure magnétique dentelée 9 contient une nombre pair d'encoches, et chaque encoche contient un sous-ensemble magnétique du rotor, lequel est constitué de telle sorte que la direction du flux magnétique radial soit opposée à la direction du flux magnétique radial du sous-ensemble magnétique des deux encoches voisines. Ainsi, le concentrateur de flux magnétique 13 est bordé par deux aimants 20, 21 dont la magnétisation est dirigée vers les dents 37, 38.

Le concentrateur de flux magnétique 13 absorbe le flux magnétique radial, tel un pôle sud magnétique. Le concentrateur de flux magnétique 7, qui est voisin du concentrateur de flux magnétique 13, est bordé par deux aimants 3, 17 dont la magnétisation est dirigée vers le concentrateur de flux magnétique 7. Le concentrateur de flux magnétique 7 expulse le flux magnétique radial, tel un pôle nord magnétique. Un tel agencement de pôles nord et pôles sud magnétiques engendre donc un flux magnétique qui prend naissance dans les aimants 3, 17, est expulsé par le concentrateur magnétique 7, traverse l'entrefer et pénètre dans le stator, à l'intérieur du noyau en fer doux de retour de flux 2, jusqu'au concentrateur de flux magnétique 8, qui l'absorbe comme un pôle sud magnétique. Le flux magnétique est ensuite redirigé à travers la dent magnétique 39, vers le concentrateur de flux magnétique 16, qui agit comme un pôle nord magnétique, en l'expulsant dans le sens radial, à travers l'entrefer 51 jusque dans le noyau de fer doux en forme de fer à cheval 1, jusqu'au concentrateur de flux magnétique 13, qui l'absorbe comme un pôle sud. À l'intérieur du concentrateur de flux magnétique 13, le flux est redirigé vers la dent 38 par les aimants 20, 17, jusque dans le concentrateur de flux magnétique 7, ce qui termine le bouclage du flux magnétique.

À la figure 5, les noyaux du stator et le bobinage ont été enlevées, et les trois pôles du rotor sont vus à partir de l'axe de rotation. Les directions de magnétisation des aimants permanents du rotor sont tels que, dans tout plan orienté similairement à l'axe de rotation 52, et coupant deux aimants permanents du rotor, ces deux aimants permanents possèdent des directions opposées de magnétisation, lesquelles directions seront globalement perpendiculaires audit plan. Ainsi, le plan orienté similairement à l'axe de rotation couplant l'aimant permanent 4, lequel aimant possède une direction de magnétisation perpendiculaire audit plan, coupe également l'aimant permanent 3, qui possède une direction de magnétisation perpendiculaire au plan, et opposée à la direction de magnétisation de l'aimant permanent 4. Les concentrateurs de flux magnétique 8, 16, 15, 7, 13, 14 sont illustrés à la figure 5. Les aimants 4, 18, 24, 25, 26, 27, 3, 17, 20, 21, 42 et 41 sont illustrés à la figure 5. Les dents 39, 33, 38 et 37 sont illustrés à la Figure 5.

La direction de magnétisation des aimants permanents est préférablement orientée parallèlement à la direction de rotation du rotor. Toutefois, il est entendu que les aimants pourraient être placés légèrement à angle sans dévier de l'essence de l'invention, et la machine offrirait des performances équivalentes. Évidemment, dans un tel cas, la direction de magnétisation ne serait plus tout à fait parallèle à la direction de rotation du rotor.

À la figure 6, une coupe effectuée dans un plan dont la normale est orientée similairement à l'axe de rotation, à travers la structure magnétique dentelée 9 (suivant la coupe A-A de la Figure 5) illustre quatre pôles du rotor et du stator. Au rotor, les encoches de la structure magnétique dentelée 9 sont remplies par les blocs non-magnétiques 19, 22, 40, qui possèdent une perméabilité magnétique relative approximativement égale à celle de l'air. Au-dessus des quatre blocs non-magnétiques se retrouvent les concentrateurs de flux 7, 13, 14 et les aimants 3, 17, 20, 21, 41, 42. Dans chaque encoche se trouve un bloc non-magnétique, un concentrateur de flux et deux aimants. Les deux aimants situés des deux côtés du concentrateur de flux ont des directions de magnétisation qui s'opposent mutuellement.

Les pièces du stator illustrées à la figure 6 sont les noyaux de fer doux 1, 12 en forme de fer à cheval, les noyaux en fer doux de retour de flux 2, 11, le conducteur électrique 5, le cylindre de support statorique 30 et les barres de support statoriques 32. Les conducteurs magnétiques 1, 12 en forme de fer à cheval sont insérés dans le cylindre de support statorique 30, lequel cylindre de support statorique 30 est fait d'un matériau non-magnétique. Chacun des noyaux en fer doux de retour de flux 2, 11 est fixé à un noyau de fer doux 1, 12 en forme de fer à cheval, par l'intermédiaire d'une barre de support statorique 32, laquelle barre de support statorique est faite de matériau non-magnétique et non-conducteur électriquement (plastique ou résine). Elles servent à maintenir en place les éléments magnétiques. Il est entendu que cette fonction de maintien pourrait être réalisée autrement. Une protection 31 peut être placée sur les bouts des noyaux de fer doux pour éviter qu'ils se détachent du cylindre de support 30. L'élément 31 ne sert qu'à maintenir en place les noyaux magnétiques en forme de fer à cheval. Il est entendu que cette fonction de maintien pourrait être réalisée différemment.

Les dimensions préférées de la machine selon une réalisation préférée de l'invention sont variables. Le diamètre de la machine variera entre 5 cm et 5 mètres. L'entrefer 51 sera entre 0.1 mm et 10 mm. Les noyaux en fer à cheval 1 auront une longueur variant de 5 cm à 100 cm. Les aimants permanents 3, 4 auront une épaisseur variant de 0.5 mm à 10 mm. La longueur des concentrateurs de flux 7, 8 variera entre 10 mm et 200 mm.

Les matériaux suivants sont préférablement utilisés pour la construction de chacun des éléments comme suit : l'isolant non-magnétique 6 est fait en aluminium, acier inoxydable, plastique ou résine; les concentrateurs de flux magnétique 7, 13, 14 en poudre de fer, acier en bloc ou laminations d'acier Fe-Si; les structures magnétiques dentelées 9, 10 sont en laminations de Fe-Si; les blocs non-magnétiques 19, 22, 40 sont en plastique, résine, acier inoxydable ou aluminium; le cylindre de support statorique 30 est en acier inoxydable ou aluminium; les barres de support statoriques 32 sont en plastique ou en résine; les noyaux en fer à cheval et noyaux de retour de flux sont en laminations de Fe-Si, mais la poudre de fer pourrait aussi être utilisée.

Lors de l'utilisation de la machine selon une réalisation préférée de l'invention en mode génératrice, les connexions électriques peuvent être reliées directement à une charge résistive, ou directement à un redresseur AC/DC. L'arbre mécanique est alors entraîné par un mouvement mécanique soit hydraulique, soit éolien, ou autre, et la machine convertit le mouvement mécanique en puissance électrique. Dès l'apparition d'un mouvement mécanique, la conversion aura lieu.

Lors de l'utilisation de la machine selon une réalisation préférée de l'invention en mode moteur, il faudra que les connexions électriques soient reliées à un onduleur qui génèrera une tension de fréquence variable. Pour la mise en marche en moteur, l'utilisateur devra envoyer une commande à l'onduleur d'augmenter sa fréquence et sa tension électrique suivant une consigne graduelle, jusqu'à ce que le régime désiré soit atteint. L'utilisateur pourra ensuite varier la vitesse de rotation à volonté, en ajustant la consigne de fréquence et de tension de l'onduleur.

Il est bon de noter qu'une pluralité de machines électriques à flux transverse peuvent être juxtaposées les unes aux autres dans l'orientation axiale, et partager l'axe de rotation commun. Tous les bobinages de conducteurs électriques peuvent alors être alimentés par un courant alternatif monophasé.

Si ces machines sont juxtaposées, elles peuvent avoir un décalage circonférentiel de la section excitatrice du rotor, ou un décalage circonférentiel des noyaux de fer doux en forme de fer à cheval et des noyaux en fer doux de retour de flux magnétique du stator. Le bobinage de conducteurs électriques est alors alimenté par des courants alternatifs polyphasés, indépendants pour chacune des machines à flux transverse localisées sur l'axe de rotation

## Revendications

1. Une machine électrique à flux transverse à courant alternatif monophasé, comprenant
un premier élément ayant des noyaux d'excitation (1), et un bobinage de conducteurs électriques (5), ledit bobinage de conducteurs électriques (5) étant bobiné de manière à englober tous lesdits noyaux d'excitation (1);
un deuxième élément ayant une section excitatrice comprenant un nombre de structures magnétiques (9, 10) ayant chacune un agencement alterné de pôles nord et de pôles sud magnétiques, lesdits pôles nord expulsant le champ magnétique à travers un entrefer (51) entre ledit premier élément et ledit deuxième élément, et lesdits pôles sud absorbant le champ magnétique traversant l'entrefer (51); **caractérisé en ce que**
chacune desdites structures magnétiques (9, 10) est formée d'une pièce dentée de sorte qu'elle comprenne un nombre d'encoches et de dents (37, 38, 39), lesquelles dents (37, 38, 39) faisant face à l'entrefer (51);
et qu'à l'intérieur de chacune desdites encoches est inséré un bloc aimanté formé d'un concentrateur de flux (13) et de deux aimants permanents (20, 21) localisés de chaque côté du concentrateur de flux (13) de sorte que chaque bloc aimanté définisse un desdits pôles nord et desdits pôles sud desdits agencements alternés, lesdits aimants permanents (20, 21) ayant des directions de magnétisation qui s'opposent mutuellement et qui sont orientées substantiellement parallèlement à la direction de rotation de n'importe lequel dudit premier élément et dudit deuxième élément par rapport à l'autre du premier élément et du deuxième élément.

2. Une machine telle que revendiquée dans la revendication 1, comprenant de plus des noyaux de retour de flux (2), lesdits noyaux de retour de flux (2) étant placés dans un espace entre chaque dit noyau d'excitation (1) et sans contact avec les dits noyaux d'excitation (1), les dits noyaux de retour de flux (2) étant en contact avec l'entrefer (51).

3. Une machine telle que revendiquée dans l'une quelconque des revendications 1 à 2, dans laquelle est inséré, dans chacune desdites encoches, en plus dudit bloc aimanté, un bloc non-magnétique (22) placé entre un fond de l'encoche et ledit bloc aimanté.

4. Une machine telle que revendiquée dans l'une quelconque des revendications 1 à 3, dans laquelle est présent, dans chacune desdites encoches, en plus dudit bloc aimanté, un espace d'air placé entre un fond de l'encoche et ledit bloc aimanté.

5. Une machine telle que revendiquée dans l'une quelconque des revendications 1 à 4, dans laquelle ledit bobinage (5) court dans une direction parallèle à la direction de mouvement de l'un du premier élément et du deuxième élément.

6. Une machine telle que revendiquée dans l'une quelconque des revendications 1 à 5, dans laquelle
l'épaisseur de l'entrefer (51) entre les extrémités desdits noyaux d'excitation (1) et lesdits blocs magnétiques est plus courte que la distance entre les extrémités desdits noyaux d'excitation (1) et les dents (37, 38, 39) séparant lesdites encoches desdites structures magnétiques (9, 10) dentées.

7. Une machine telle que revendiquée dans la revendication 2, dans laquelle la plus grande dimension de chacun desdits noyaux de retour de flux (2) est inférieure à la distance entre deux arêtes de chacun desdits noyaux d'excitation (1), lesdites arêtes étant en contact avec le dit entrefer (51).

8. Une machine telle que revendiquée dans l'une quelconque des revendications 1 à 7, dans laquelle ledit bobinage de conducteurs électriques (5) est alimenté par un courant alternatif monophasé.

9. Une machine telle que revendiquée dans la revendication 2, dans laquelle le bobinage (5) est bordé sur trois côtés d'une pluralité de noyaux d'excitation (1), et sur le quatrième côté d'une pluralité de noyaux de retour de flux (2).

10. Une machine telle que revendiquée dans l'une quelconque des revendications 1 à 9, dans laquelle au moins un dudit premier élément et dudit deuxième élément peut tourner autour d'un axe de rotation commun audit premier élément et audit deuxième élément.

11. Une machine telle que revendiquée dans la revendication 10, dans laquelle le bobinage (5) est en forme de tore, enroulé parallèlement à la direction de rotation du deuxième élément.

12. Une machine telle que revendiquée dans l'une quelconque des revendications 10 et 11, dans laquelle ladite section excitatrice est située à l'extérieur dudit premier élément, de telle manière que la distance entre l'axe de rotation et lesdits blocs magnétiques soit plus grande que la distance entre ledit axe de rotation et ledit bobinage de conducteurs électriques (5).

13. Une machine telle que revendiquée dans l'une quelconque des revendications 10 à 12, dans laquelle ladite section excitatrice est située à l'intérieur dudit premier élément, de telle manière que la distance entre ledit axe de rotation et lesdits blocs magnétiques soit plus courte que la distance entre ledit axe de rotation et ledit bobinage de conducteurs électriques (5).

14. Un appareil électrique comprenant une pluralité de machines électriques à flux transverse selon la revendication 10, lesdites machines étant juxtaposées les unes aux autres dans l'orientation axiale et partageant un axe de rotation commun, ayant les dits bobinages de conducteurs électriques (5) alimentés par un courant alternatif monophasé.

15. Un appareil électrique comprenant une pluralité de machines électriques à flux transverse selon la revendication 10, lesdites machines étant juxtaposées les unes aux autres dans l'orientation axiale et partageant un axe de rotation commun, ayant un décalage circonférentiel de la dite section excitatrice, le bobinage de conducteurs électriques (5) étant alimenté par des courants alternatifs polyphasés, lesquels sont indépendants pour chacune des dites machines à flux transverse localisées sur le dit axe de rotation.

16. Un appareil électrique comprenant une pluralité de machines électriques à flux transverse selon la revendication 10, lesdites machines étant juxtaposées les unes aux autres dans l'orientation axiale et partageant un axe de rotation commun, ayant un décalage circonférentiel des dits noyaux d'excitation, le bobinage de conducteurs électriques (5) étant alimenté par des courants alternatifs polyphasés, lesquels sont indépendants pour chacune des dites machines à flux transverse localisées sur le dit axe de rotation.

17. Une machine telle que revendiquée dans la revendication 10, dans laquelle les structures magnétiques (9, 10) dentées sont de forme généralement cylindrique et sont centrées sur le dit axe de rotation.

18. Une machine telle que revendiquée dans l'une quelconque des revendications 2 à 12 et 17, **caractérisée en ce que** la section excitatrice du deuxième élément est composée de deux desdits structures magnétiques (9, 10) dentées, lesquelles structures magnétiques (9, 10) dentées sont isolées l'une de l'autre par un isolant non-magnétique (6), lesquelles structures magnétiques (9, 10) dentées contiennent chacune un nombre d'encoches égal au nombre de pôles magnétiques de ladite machine électrique, à l'intérieur desquelles encoches sont insérés lesdits blocs aimantés en quantité de un bloc aimanté par encoche.

19. Une machine telle que revendiquée dans la revendication 18, **caractérisée en ce que** lesdits noyaux d'excitation (1) dudit premier élément sont en forme de fer à cheval et sont en quantité égale à la moitié dudit nombre de dits pôles magnétiques; que lesdits noyaux de retour de flux (2) sont en quantité égale à la moitié dudit nombre des dits pôles magnétiques; que lesquels noyaux (1) en forme de fer à cheval et noyaux de retour de flux (2) sont disposés périphériquement de façon alternée, ne sont pas en contact les uns avec les autres, sont localisés d'un seul côté par rapport à la dite section excitatrice du deuxième élément, étant séparés du dit deuxième élément par l'entrefer (51), et ont les faces radiales de leurs deux extrémités respectives faisant généralement face à deux des dits blocs aimantés; et que le dit bobinage de conducteurs électriques (5) est localisé à l'intérieur des dits noyaux (1) en forme de fer à cheval.

20. Une machine telle que revendiquée dans l'une quelconque des revendications 1 à 12 et 17 à 19, dans laquelle le deuxième élément est un rotor effectuant des révolutions autour d'un axe de rotation.

21. Une machine telle que revendiquée à la revendication 20, dans laquelle le bobinage (5) est disposé circulairement dans une direction parallèle à la direction de rotation du deuxième élément.

22. Une machine telle que revendiquée dans l'une quelconque des revendications 19 à 21, **caractérisée en ce que** la plus courte distance d'entrefer entre les extrémités des dits noyaux (1) en forme de fer à cheval et les dits concentrateurs de flux magnétique (7, 8, 13, 16), est plus courte que la distance entre les extrémités des dits noyaux (1) en forme de fer à cheval et les dents des dites structures magnétiques (9, 10) dentées, et que la distance d'entrefer la plus courte entre les extrémités des dits noyaux de retour de flux (2) et les dits concentrateurs de flux magnétique (7, 8, 13, 16) est plus courte que la distance entre les extrémités des dits noyaux de retour de flux (2) et les dents des dites structures magnétiques (9, 10) dentées.

23. Une machine telle que revendiquée dans l'une quelconque des revendications 19 à 22, **caractérisée en ce que** la plus grande dimension de chaque dit noyau de retour de flux (2) est inférieure à la distance entre deux arêtes de chaque dit noyau de fer doux (1) en forme de fer à cheval et en contact avec l'entrefer (51), lesquelles dites arêtes étant les plus distancées sur un plan incluant l'entrefer (51) et parallèle à la direction de mouvement du dit deuxième élément.

24. Une machine telle que revendiquée dans l'une quelconque des revendications 20 à 23, **caractérisée en ce que** la dite section excitatrice est arrangée radialement sur le deuxième élément.

25. Une machine telle que revendiquée dans l'une quelconque des revendications 18 à 24, **caractérisée en ce que** la dite section excitatrice du deuxième élément est située à l'extérieur dudit premier élément, de telle manière que la distance entre l'axe de rotation et les dits blocs aimantés soit plus grande que la distance entre le dit axe de rotation et le dit bobinage de conducteurs électriques (5).

26. Une machine telle que revendiquée dans l'une quelconque des revendications 18 à 25, **caractérisée en ce que** la dite section excitatrice du deuxième élément est située à l'intérieur dudit premier élément, de telle manière que la distance entre le dit axe de rotation et les dits blocs aimantés soit plus courte que la distance entre le dit axe de rotation et le dit bobinage de conducteurs électriques (5).

27. Une machine **caractérisée en ce qu'**une pluralité de machines électriques telles que revendiquées dans l'une quelconque des revendications 20 à 26, juxtaposées les unes aux autres dans l'orientation axiale, partagent un dit axe de rotation commun, ayant les dits bobinages de conducteurs électriques (5) alimentés par un courant alternatif monophasé.

28. Une machine telle que revendiquée dans l'une quelconque des revendications 1 à 27, dans laquelle les structures magnétiques sont utilisées dans une configuration linéaire.

## Claims

1. Single-phase alternating current transverse flux electric machine, comprising
a first element that has excitation cores (1), and a winding of electrical conductors (5), said winding of electrical conductors (5) being wound so as to encompass all said excitation cores (1);
a second element that has an exciting section comprising a number of magnetic structures (9, 10) each having an alternating arrangement of magnetic north poles and south poles, said north poles expelling the magnetic field through an air gap (51) between said first element and said second element, and said south poles absorbing the magnetic field passing through the air gap (51);
**characterized in that**
each of said magnetic structures (9, 10) is formed by a toothed part in such a way that it comprises a number of notches and teeth (37, 38, 39), said teeth (37, 38, 39) facing the air gap (51);
and that, inside each of said notches there is inserted a magnetized block formed by a flux concentrator (13) and two permanent magnets (20, 21) located on each side of the flux concentrator (13) so that each magnetized block defines one of said north poles and of said south poles of said alternating arrangements, said permanent magnets (20, 21) having magnetization directions that are mutually opposed and that are oriented substantially parallel to the direction of rotation of either of said first element and of said second element relative to the other of the first element and of the second element.

2. Machine according to Claim 1, also comprising flux return cores (2), said flux return cores (2) being placed in a space between each said excitation core (1) and without contact with said excitation cores (1), said flux return cores (2) being in contact with the air gap (51).

3. Machine according to any one of Claims 1 or 2, in which is inserted, in each of said notches, in addition to said magnetized block, a non-magnetic block (22) placed between a bottom of the notch and said magnetized block.

4. Machine according to any one of Claims 1 to 3, in which is included, in each of said notches, in addition to said magnetized block, an air space placed between a bottom of the notch and said magnetized block.

5. Machine according to any one of Claims 1 to 4, in which said winding (5) runs in a direction parallel to the direction of movement of one of the first element and of the second element.

6. Machine according to any one of Claims 1 to 5, in which
the thickness of the air gap (51) between the ends of said excitation cores (1) and said magnetic blocks is shorter than the distance between the ends of said excitation cores (1) and the teeth (37, 38, 39) separating said notches of said toothed magnetic structures (9, 10).

7. Machine according to Claim 2, in which the greatest dimension of each of said flux return cores (2) is less than the distance between two edges of each of said excitation cores (1), said edges being in contact with said air gap (51).

8. Machine according to any one of Claims 1 to 7, in which said winding of electrical conductors (5) is powered by a single-phase alternating current.

9. Machine according to Claim 2, in which the winding (5) is bounded on three sides by a plurality of excitation cores (1), and on the fourth side by a plurality of flux return cores (2).

10. Machine according to any one of Claims 1 to 9, in which at least one of said first element and of said second element can rotate about a rotation axis common to said first element and to said second element.

11. Machine according to Claim 10, in which the winding (5) is in the shape of a torus, wound parallel to the direction of rotation of the second element.

12. Machine according to any one of Claims 10 and 11, in which said exciting section is situated outside of said first element, so that the distance between the rotation axis and said magnetic blocks is greater than the distance between said rotation axis and said winding of electrical conductors (5).

13. Machine according to any one of Claims 10 to 12, in which said exciting section is situated inside of said first element, so that the distance between said rotation axis and said magnetic blocks is shorter than the distance between said rotation axis and said winding of electrical conductors (5).

14. Electrical apparatus comprising a plurality of transverse flux electric machines according to Claim 10, said machines being juxtaposed relative to one another in the axial orientation and sharing a common rotation axis, having said windings of electrical conductors (5) powered by a single-phase alternating current.

15. Electrical apparatus comprising a plurality of transverse flux electric machines according to Claim 10, said machines being juxtaposed relative to one another in the axial orientation and sharing a common rotation axis, having a circumferential offset from said exciting section, the winding of electrical conductors (5) being powered by polyphase alternating currents, which are independent for each of said transverse flux machines located on said rotation axis.

16. Electrical apparatus comprising a plurality of transverse flux electric machines according to Claim 10, said machines being juxtaposed relative to one another in the axial orientation and sharing a common rotation axis, having a circumferential offset from said excitation cores, the winding of electrical conductors (5) being powered by polyphase alternating currents, which are independent for each of said transverse flux machines located on said rotation axis.

17. Machine according to Claim 10, in which the toothed magnetic structures (9, 10) are of generally cylindrical shape and are centred on said rotation axis.

18. Machine according to any one of Claims 2 to 12 and 17, **characterized in that** the exciting section of the second element consists of two of said toothed magnetic structures (9, 10), which toothed magnetic structures (9, 10) are insulated from one another by a non-magnetic insulator (6), which toothed magnetic structures (9, 10) each contain a number of notches equal to the number of magnetic poles of said electric machine, inside which notches are inserted said magnetized blocks with one magnetized block per notch.

19. Machine according to Claim 18, **characterized in that** said excitation cores (1) of said first element are horseshoe shaped and their quantity equals half said number of said magnetic poles; that the quantity of said flux return cores (2) equals half said number of said magnetic poles; that said horseshoe-shaped cores (1) and flux return cores (2) are arranged peripherally in an alternating manner, are not in contact with one another, are located on just one side relative to said exciting section of the second element, being separated from said second element by the air gap (51), and have the radial faces of their two respective ends generally facing two of said magnetized blocks; and that said winding of electrical conductors (5) is located inside said horseshoe-shaped cores (1).

20. Machine according to any one of Claims 1 to 12 and 17 to 19, in which the second element is a rotor performing revolutions about a rotation axis.

21. Machine according to Claim 20, in which the winding (5) is arranged circularly in a direction parallel to the direction of rotation of the second element.

22. Machine according to any one of Claims 19 to 21, **characterized in that** the shortest air gap distance between the ends of said horseshoe-shaped cores (1) and said magnetic flux concentrators (7, 8, 13, 16) is shorter than the distance between the ends of said horseshoe-shaped cores (1) and the teeth of said toothed magnetic structures (9, 10), and that the shortest air gap distance between the ends of said flux return cores (2) and said magnetic flux concentrators (7, 8, 13, 16) is shorter than the distance between the ends of said flux return cores (2) and the teeth of said toothed magnetic structures (9, 10).

23. Machine according to any one of Claims 19 to 22, **characterized in that** the greatest dimension of each of said flux return cores (2) is less than the distance between two edges of each said horseshoe-shaped soft iron core (1) in contact with the air gap (51), which said edges being at the greatest distance on a plane including the air gap (51) and parallel to the direction of movement of said second element.

24. Machine according to any one of Claims 20 to 23, **characterized in that** said exciting section is arranged radially on the second element.

25. Machine according to any one of Claims 18 to 24, **characterized in that** said exciting section of the second element is situated outside of said first element, so that the distance between the rotation axis and said magnetized blocks is greater than the distance between said rotation axis and said winding of electrical conductors (5).

26. Machine according to any one of Claims 18 to 25, **characterized in that** said exciting section of the second element is situated inside of said first element, so that the distance between said rotation axis and said magnetized blocks is shorter than the distance between said rotation axis and said winding of electrical conductors (5).

27. Machine, **characterized in that** a plurality of electric machines according to any one of Claims 20 to 26, juxtaposed relative to one another in the axial orientation, share one said common rotation axis, having said windings of electrical conductors (5) powered by a single-phase alternating current.

28. Machine according to any one of Claims 1 to 27, in which the magnetic structures are used in a linear configuration.

## Patentansprüche

1. Elektrische Maschine mit transversalem Fluss und Einphasen-Wechselstrom, die enthält:
ein erstes Element mit Erregungskernen (1) und einer Wicklung von elektrischen Leitern (5), wobei die Wicklung von elektrischen Leitern (5) so gewickelt ist, dass sie alle Erregungskerne (1) einschließt;
ein zweites Element mit einem Erregerabschnitt mit einer Anzahl von magnetischen Strukturen (9, 10) mit jeweils einer abwechselnden Anordnung von magnetischen Nordpolen und Südpolen, wobei die Nordpole das Magnetfeld durch einen Luftspalt (51) zwischen dem ersten Element und dem zweiten Element austreiben und die Südpole das den Luftspalt (51) durchquerende Magnetfeld annehmen,
**dadurch gekennzeichnet, dass**
jede der magnetischen Strukturen (9, 10) aus einem Zahnstück ausgebildet ist, so dass es eine Anzahl von Kerben und Zähnen (37, 38, 39) enthält, wobei die Zähne (37, 38, 39) dem Luftspalt (51) zugewandt sind;
und dass in das Innere von jeder der Kerben ein magnetisierter Block eingesetzt ist, der aus einem Flusskonzentrator (13) und zwei Permanentmagneten (20, 21), die auf jeder Seite des Flusskonzentrators (13) angeordnet sind, gebildet ist, so dass jeder magnetisierte Block einen der Nordpole und der Südpole der abwechselnden Anordnungen definiert, wobei die Permanentmagnete (20, 21) Magnetisierungsrichtungen aufweisen, die zueinander entgegengesetzt sind und die im Wesentlichen parallel zur Drehrichtung eines beliebigen des ersten Elements und des zweiten Elements in Bezug auf das andere des ersten Elements und des zweiten Elements orientiert sind.

2. Maschine nach Anspruch 1, die ferner Flussrückführungskerne (2) enthält, wobei die Flussrückführungskerne (2) in einem Raum zwischen jedem Erregungskern (1) und ohne Kontakt mit den Erregungskernen (1) angeordnet sind, wobei die Flussrückführungskerne (2) mit dem Luftspalt (51) in Kontakt stehen.

3. Maschine nach einem der Ansprüche 1 bis 2, wobei in jede der Kerben zusätzlich zum magnetisierten Block ein nichtmagnetischer Block (22) eingesetzt ist, der zwischen einem Boden der Kerbe und dem magnetisierten Block angeordnet ist.

4. Maschine nach einem der Ansprüche 1 bis 3, wobei in jeder der Kerben zusätzlich zum magnetisierten Block ein Luftraum vorhanden ist, der zwischen einem Boden der Kerbe und dem magnetisierten Block angeordnet ist.

5. Maschine nach einem der Ansprüche 1 bis 4, wobei die Wicklung (5) in einer zur Bewegungsrichtung von einem des ersten Elements und des zweiten Elements parallelen Richtung verläuft.

6. Maschine nach einem der Ansprüche 1 bis 5, wobei
die Dicke des Luftspalts (51) zwischen den Enden der Erregungskerne (1) und den magnetischen Blöcken kürzer ist als der Abstand zwischen den Enden der Erregungskerne (1) und den Zähnen (37, 38, 39), die die Kerben der magnetischen Zahnstrukturen (9, 10) trennen.

7. Maschine nach Anspruch 2, wobei die größere Abmessung von jedem der Flussrückführungskerne (2) geringer ist als der Abstand zwischen zwei Kanten von jedem der Erregungskerne (1), wobei die Kanten mit dem Luftspalt (51) in Kontakt stehen.

8. Maschine nach einem der Ansprüche 1 bis 7, wobei die Wicklung von elektrischen Leitern (5) mit einem Einphasen-Wechselstrom versorgt wird.

9. Maschine nach Anspruch 2, wobei die Wicklung (5) auf drei Seiten von mehreren Erregungskernen (1) und auf der vierten Seite von mehreren Flussrückführungskernen (2) begrenzt ist.

10. Maschine nach einem der Ansprüche 1 bis 9, wobei das erste Element und/oder das zweite Elements sich um eine dem ersten Element und dem zweiten Element gemeinsame Drehachse drehen kann.

11. Maschine nach Anspruch 10, wobei die Wicklung (5) torusförmig ist und parallel zur Drehrichtung des zweiten Elements gewickelt ist.

12. Maschine nach einem der Ansprüche 10 und 11, wobei der Erregerabschnitt außerhalb des ersten Elements liegt, so dass der Abstand zwischen der Drehachse und den magnetischen Blöcken größer ist als der Abstand zwischen der Drehachse und der Wicklung von elektrischen Leitern (5).

13. Maschine nach einem der Ansprüche 10 bis 12, wobei der Erregerabschnitt innerhalb des ersten Elements liegt, so dass der Abstand zwischen der Drehachse und den magnetischen Blöcken kürzer ist als der Abstand zwischen der Drehachse und der Wicklung von elektrischen Leitern (5).

14. Elektrisches Gerät mit mehreren elektrischen Maschinen mit transversalem Fluss nach Anspruch 10, wobei die Maschinen in der axialen Orientierung aneinander gereiht sind und sich eine gemeinsame Drehachse teilen, wobei die Wicklungen von elektrischen Leitern (5) mit einem Einphasen-Wechselstrom versorgt werden.

15. Elektrisches Gerät mit mehreren elektrischen Maschinen mit transversalem Fluss nach Anspruch 10, wobei die Maschinen in der axialen Orientierung aneinander gereiht sind und sich eine gemeinsame Drehachse teilen, mit einem Umfangsversatz des Erregerabschnitts, wobei die Wicklung von elektrischen Leitern (5) mit Mehrphasen-Wechselströmen versorgt wird, die für jede der Maschinen mit transversalem Fluss, die auf der Drehachse angeordnet sind, unabhängig sind.

16. Elektrisches Gerät mit mehreren elektrischen Maschinen mit transversalem Fluss nach Anspruch 10, wobei die Maschinen in der axialen Orientierung aneinander gereiht sind und sich eine gemeinsame Drehachse teilen, mit einem Umfangsversatz der Erregungskerne, wobei die Wicklung von elektrischen Leitern (5) mit Mehrphasen-Wechselströmen versorgt wird, die für jede der Maschinen mit transversalem Fluss, die auf der Drehachse angeordnet sind, unabhängig sind.

17. Maschine nach Anspruch 10, wobei die magnetischen Zahnstrukturen (9, 10) eine im Allgemeinen zylindrische Form aufweisen und auf der Drehachse zentriert sind.

18. Maschine nach einem der Ansprüche 2 bis 12 und 17, **dadurch gekennzeichnet, dass** der Erregerabschnitt des zweiten Elements aus zwei magnetischen Zahnstrukturen (9, 10) besteht, wobei die magnetischen Zahnstrukturen (9, 10) durch einen nichtmagnetischen Isolator (6) voneinander isoliert sind, wobei die magnetischen Zahnstrukturen (9, 10) jeweils eine Anzahl von Kerben gleich der Anzahl von Magnetpolen der elektrischen Maschine enthalten, wobei in das Innere der Kerben die magnetisierten Blöcke in einer Menge von einem magnetisierten Block pro Kerbe eingesetzt sind.

19. Maschine nach Anspruch 18, **dadurch gekennzeichnet, dass** die Erregungskerne (1) des ersten Elements hufeisenförmig sind und in einer Menge gleich der Hälfte der Anzahl der Magnetpole vorhanden sind; dass die Flussrückführungskerne (2) in einer Menge gleich der Hälfte der Anzahl der Magnetpole vorhanden sind; dass die hufeisenförmigen Kerne (1) und die Flussrückführungskerne (2) am Umfang abwechselnd angeordnet sind, nicht miteinander in Kontakt stehen, auf einer einzigen Seite in Bezug auf den Erregerabschnitt des zweiten Elements angeordnet sind, vom zweiten Element durch den Luftspalt (51) getrennt sind und deren radiale Flächen ihrer zwei jeweiligen Enden im Allgemeinen zwei der magnetisierten Blöcke zugewandt sind; und dass die Wicklung von elektrischen Leitern (5) im Inneren der hufeisenförmigen Kerne (1) angeordnet ist.

20. Maschine nach einem der Ansprüche 1 bis 12 und 17 bis 19, wobei das zweite Element ein Rotor ist, der Umdrehungen um eine Drehachse durchführt.

21. Maschine nach Anspruch 20, wobei die Wicklung (5) kreisförmig in einer zur Drehrichtung des zweiten Elements parallelen Richtung angeordnet ist.

22. Maschine nach einem der Ansprüche 19 bis 21, **dadurch gekennzeichnet, dass** der kürzere Abstand des Luftspalts zwischen den Enden der hufeisenförmigen Kerne (1) und den Magnetflusskonzentratoren (7, 8, 13, 16) kürzer ist als der Abstand zwischen den Enden der hufeisenförmigen Kerne (1) und den Zähnen der magnetischen Zahnstrukturen (9, 10), und dass der kürzere Abstand des Luftspalts zwischen den Enden der Flussrückführungskerne (2) und den Magnetflusskonzentratoren (7, 8, 13, 16) kürzer ist als der Abstand zwischen den Enden der Flussrückführungskerne (2) und den Zähnen der magnetischen Zahnstrukturen (9, 10).

23. Maschine nach einem der Ansprüche 19 bis 22, **dadurch gekennzeichnet, dass** die größere Abmessung jedes Flussrückführungskerns (2) geringer ist als der Abstand zwischen zwei Kanten jedes hufeisenförmigen Weicheisenkerns (1), der mit dem Luftspalt (51) in Kontakt steht, wobei die Kanten in einer Ebene, die den Luftspalt (51) enthält und die zur Bewegungsrichtung des zweiten Elements parallel ist, am weitesten beabstandet sind.

24. Maschine nach einem der Ansprüche 20 bis 23, **dadurch gekennzeichnet, dass** der Erregerabschnitt radial am zweiten Element angeordnet ist.

25. Maschine nach einem der Ansprüche 18 bis 24, **dadurch gekennzeichnet, dass** der Erregerabschnitt des zweiten Elements außerhalb des ersten Elements liegt, so dass der Abstand zwischen der Drehachse und den magnetisierten Blöcken größer ist als der Abstand zwischen der Drehachse und der Wicklung von elektrischen Leitern (5).

26. Maschine nach einem der Ansprüche 18 bis 25, **dadurch gekennzeichnet, dass** der Erregerabschnitt des zweiten Elements innerhalb des ersten Elements liegt, so dass der Abstand zwischen der Drehachse und den magnetisierten Blöcken kürzer ist als der Abstand zwischen der Drehachse und der Wicklung von elektrischen Leitern (5).

27. Maschine, **dadurch gekennzeichnet, dass** mehrere elektrische Maschinen nach einem der Ansprüche 20 bis 26, die in der axialen Orientierung aneinander gereiht sind, sich eine gemeinsame Drehachse teilen, wobei die Wicklungen von elektrischen Leitern (5) mit einem Einphasen-Wechselstrom versorgt werden.

28. Maschine nach einem der Ansprüche 1 bis 27, wobei die magnetischen Strukturen in einer linearen Konfiguration verwendet werden.
